# EUROPEAN PATENT APPLICATION

(11) **EP 2 998 346 A1**
(43) Date of publication of application: **23.03.2016**
(21) Application number: 15185908.9
(22) Date of filing: 18.09.2015
(51) Int. Cl.: C08J 9/10, C08J 9/00, B29D 35/00, C08L 23/08, A43B 13/02

(54) **COMPOUNDS BASED ON CROSSLINKABLE POLYOLEFINS AND THERMOPLASTIC POLYURETHANES**

(30) Priority: 19.09.2014 IT VI20140242
(71) Applicant: A.P.I. Applicazioni Plastiche Industriali S.P.A., 36065 Mussolente VI (IT)
(72) Inventor: BRUNETTI, Sergio, 36061 BASSANO DEL GRAPPA (VI) (IT)
(74) Representative: Bonini, Ercole

(57) **Abstract**

The invention relates to a compound for the production of high softness and thermal stability crosslinked articles made by injection molding, a process for the production thereof and an article produced with this compound. The compound comprises (a) a crosslinkable polyolefin, such as ethylene vinyl acetates (EVAs); (b) a thermoplastic polyurethane (TPU), polyether or polyester or mixtures thereof containing a plasticizer or not, wherein said TPU containing a plasticizer or not has a softening point determined via DSC lower than 160 °C, preferably lower than 130 °C; (c) a stabilizing polymer preferably selected from LDPE, HDPE, LLDPE, metallocene polyolefins with a melting point lower than 130 °C or mixtures thereof, in particular LDPE; (d) at least one crosslinking agent, in particular a peroxide or the like; (e) at least one foaming agent; and (f) optionally, one or more further additives selected from coagents, foaming agents, lubricants, kickers, fillers, pigments and oils, wherein (i) the weight ratio between crosslinkable polyolefin and TPU without the weight of any plasticizer present corresponds to a range from 100:100 to 100:3, preferably from 100:40 to 100:5, more preferably from 100:40 to 100:10, even more preferably from 100:30 to 100:15; (ii) the hardness of the TPU with or without plasticizer is in the range from 38 to 85 Shore A, preferably lower than 70 Shore A, even more preferably lower than 55 Shore A.

## Description

### Technical field of the invention

The invention relates to a compound for the production of foamed crosslinked articles, based on crosslinkable polyolefins, e.g. ethyl vinyl esters such as ethylene vinyl acetate (EVA) and thermoplastic polyurethanes (TPUs). The compound can be used in manufacturing soles, midsoles and uppers for shoes, and also in the production of technical articles and sports applications.

### Prior art

The crosslinking technique of polyethylenes (PEs) and ethylene vinyl acetates (EVAs) using peroxides for making injection molded articles such as technical articles, shoes, wheels, etc., is known.

The use of crosslinked products allows obtaining, compared to thermoplastic materials, polymers with superior physical-mechanical features together with a high thermal resistance.

Crosslinked products can substantially be divided into compact and foamed products with very low minimum densities that can be achieved, of the order of 100 kg/m³ at room temperature.

It is mainly in their foamed version that these products show the positive contribution of crosslinking for the purposes of mechanical and thermal resistance features. Due to these features, foamed crosslinked EVA products have achieved great success in the production of soft articles, while crosslinked PE products achieved that in the production of more rigid articles.

A key feature of crosslinked EVA products of the described type is their softness which, together with the specific weight, allows extremely lightweight materials to be obtained, able to replace more expensive products such as cork, rubbers, etc.

A drawback shown by these foamed products is their dimensional instability under hot conditions; in particular, these materials, when brought to high temperatures, tend to shrink.

In fact, these articles can both for casual reasons and for application reasons be exposed to higher temperatures than room temperature.

Consequently, these materials can shrink permanently and irreversibly due to their dimensional instability under hot conditions. Therefore, such materials may not be used in applications where dimensional stability is an essential requirement, as the already mentioned use for making shoe or slipper soles.

In fact, the sole made of crosslinked material is generally assembled by gluing or stitching to the upper; a poor dimensional thermal stability of the sole, for example during transport where the shoe can be exposed to temperatures of 50-70 °C, can cause the deformation of the upper, resulting in a deformed, aesthetically unacceptable shoe of a size other than that stated.

### Disclosure of the invention

The object of the invention is to provide a compound, to be used mainly in soles and uppers for shoes, which, after its crosslinking and foaming, has a very low thermal shrinkage level, possibly of values below 2.5%, more preferably values below 1.5% measured at 70 °C for 24 hours, while retaining sufficient softness of the material.

In other words, the object of the invention is to overcome the highlighted limits of dimensional thermal stability discussed above, i.e. making a compound formulation allowing to obtain crosslinked and foamed articles with a thermal shrinkage upon temperature changes compliant with the usage requirements, such as for making soles, uppers or the like while retaining a certain softness of the polymer and all the features described above.

A further object of the invention is to provide a method for the production of such compounds.

The above-mentioned objects, other objects and advantages that will be better highlighted hereinafter are achieved by a compound for the production of crosslinked and foamed articles obtained by injection molding as defined by the first claim, and precisely by a compound comprising:
(a) a crosslinkable polyolefin, selected from ethylene vinyl acetates (EVAs); ethylene propylene rubbers (EPRs); elastomers such as olefin block copolymers (OBCs); polyolefin elastomers such as POE or ethylene propylene rubbers (EPRs); ethylene propylene diene rubbers (EPDMs); nitrile rubbers (such as those described in patent IT01307075); or styrenic elastomers such as styrene-isoprene-styrene (SIS), styrene-ethylenebutylene-styrene (SEBS), styrene-butadiene-styrene (SBS), styrene-ethylene-propylene-styrene (SEPS), styrene-ethylene-ethylene/propylene-styrene (SEEPS) or mixtures thereof;
(b) a thermoplastic polyurethane (TPU), polyether or polyester or mixtures thereof either containing a plasticizer or not, wherein said TPU, whether plasticized or not, has a softening point determined by differential scanning calorimetry (DSC) lower than 160 °C, preferably lower than 150 °C, more preferably lower than 130 °C, even more preferably lower than 125 °C;
(c) a stabilizing polymer preferably selected from LDPE (low-density polyethylene), HDPE (high-density polyethylene), LLDPE (linear low-density polyethylene), metallocene polyolefins with a melting point lower than 130 °C, or mixtures thereof, in particular LDPE;
(d) at least one crosslinking agent, in particular a peroxide or the like;
(e) at least one foaming agent; and
(f) optionally, one or more further additives selected from coagents, lubricants, kickers, fillers, pigments and oils;
   wherein
   (i) the weight ratio between crosslinkable polyolefin and TPU without the weight of any plasticizers present in the TPU equals to a range from 100:100 to 100:3, preferably from 100:40 to 100:5, more preferably from 100:40 to 100:10, even more preferably from 100:30 to 100:15;
   (ii) the hardness of the TPU, whether plasticized or not, is in the range from 38 to 85 Shore A, preferably is lower than 70 Shore A, more preferably lower than 55 Shore A.

The softening point determined by DSC refers to a determination according to the ISO 11357 and DIN 53765 standards, while the Shore A hardness is understood as determined according to the ASTM D2240 method. The indication of dimensional thermal stability values (thermal shrinkage) refers to a determination of the volume percentage reduction on a 120x90x6 mm plate after staying in a ventilated oven for 24h at the temperatures of 50 °C and 70 °C (according to the indications in the text).

The use of thermoplastic polyurethane, in particular of plasticized polyurethane combined with crosslinkable polyolefin such as EVA, according to the invention, has allowed achieving articles with thermal shrinkage characteristics lower than 2.5%. In addition, such a compound shows greater elasticity and higher grip than a compound based on a crosslinkable polyolefin not containing TPU as elastomer. In fact, it has been observed that adding thermoplastic polyurethanes to the crosslinkable polyolefin according to the invention allows obtaining compounds making articles with greater elastic features and lower thermal shrinkage.

The invention also relates to the use of TPU, whether plasticized or not, having the hardness and in the amounts specified in crosslinkable polyolefin-based compounds for reducing the thermal shrinkage in the compound in its crosslinked and foamed form and thus increasing the dimensional thermal stability.

In preferred variants of the invention, values of thermal shrinkage of the crosslinked compound lower than 1.5% can be reached. In particular these values are reached when having 15 or more parts by weight of TPU by 100 parts by weight of EVA. Values lower than 1 % have also been observed.

It has been observed that the addition of thermoplastic polyurethanes having a hardness of between 38 and 85 Shore A to the compounds, in known amounts as indicated at point (i) based only on crosslinkable polyolefins, using conventional production technologies as described hereinafter, allows obtaining products with improved thermal stability (lower thermal shrinkage), while the other physical-mechanical features improve compared to the same compound without thermoplastic polyurethane.

In the case of EVA, EVAs with different melt flow indexes (MFI) and vinyl acetate (VA) contents may be used. Preferably, the values for the MFI at 190 °C range from 1.5 to 7, preferably from 1.5 - 2, more preferably they equal to a value of about 2. When MFI is referred to in the present application, it is meant an MFI determined at 190 °C (21.18 N) according to the ASTM 1238 method.

In an advantageous variant of the invention, the VA content in the EVA is in the range from 15% to 30% by weight, preferably it corresponds to a value of about 18% by weight. Preferably, the EVA used to make the compound not yet crosslinked is a non-derivatized ethylene-vinyl acetate, for example by grafting. In a preferred variant of the invention, the compound includes foaming agents generating gas through their thermal destruction, such as azodicarbonamides or the like. The presence of the foaming agent allows obtaining a foamed polymer material which ensures softness and elasticity of the end product. Due to the presence of the TPU according to the invention, also the foamed compound has a high dimensional thermal stability (low thermal shrinkage). Preferably, the crosslinking agent is a peroxide. Peroxides are crosslinking agents that are activated at a certain temperature.

Preferred peroxides are dicumyl peroxide, bis(tert-butyl peroxy propyl)benzene, 2,5-bis(tert-butyl peroxy)-2,5-dimethylhexane.

Particularly preferred is bis(tert-butyl peroxy propyl)benzene.

In preferred variants of the invention, the compound includes one or more of the additives indicated at point (f).

In a preferred variant of the invention, the compound includes coagents. By coagents it is meant agents that block the secondary reactions of peroxides, thus optimizing the crosslinking yield. Preferred coagents are triallylcyanurates, triallylisocyanurates, ethylene glycol dimethacrylate and trimethylolpropane trimethacrylate.

Advantageously, the compound includes a lubricant. Lubricants favor the detachment step of the articles from the molds and limit the occurrence of frictions in the processing machines. Suitable lubricants, according to the invention, are for example stearin and stearates.

Further additives, which may be useful in case of using foaming agents that develop gas during their destruction, are kickers, which regulate the degradation temperature of the foaming agents. Advantageously, kickers are selected from metal oxides, such as zinc, or glycols.

Advantageously, different types of fillers such as calcium carbonates or silicas are used in the compound both as nucleating agents to favor a homogeneous dispersion of components and gases, and to reduce the costs of the mixture.

If it is necessary to color the mixture, pigments are added to the compound. Moreover, the compound according to the invention may include, in advantageous cases, oils which allow further plasticizing the compound and/or which allow further reducing the dustiness of the mixture being processed. Preferred types of agents were previously mentioned, but also other types of additives are conceivable. The selection of these additives, their amounts used and the combination of different additives are within the skills of the man skilled in the art. The specific additives listed above, however, proved especially favorable in obtaining a crosslinked and foamed product with the desired features.

The compound according to the invention can be made with all the polymers listed at point (a), but particularly satisfactory results are obtained if the crosslinkable polyolefin indicated at point (a) is an ethylene vinyl acetate (EVA).

If the crosslinkable polyolefin indicated at point (a) includes an ethylene vinyl acetate (EVA), the compound in a preferred variant of the invention further includes, as crosslinkable polyolefin, butylene acrylate (EBA) and ethylene methylacrylate (EMA).

Surprisingly, contrary to what is said in document CN102604306, in the compound according to the invention TPU and EVA are mixable without grafting the EVA with maleic anhydride, and this with TPU amounts much higher than those indicated in the Chinese document.

In a very preferred variant of the invention, the TPU used includes a plasticizer and is therefore a plasticized TPU.

Advantageously, the plasticizer is present in amounts up to a TPU:plasticizer weight ratio of 1:1, or in smaller amounts. The presence of a plasticizer allows adjusting the Shore A hardness of the TPU which is crucial to obtain a soft crosslinked and foamed compound with low thermal shrinkage. The amounts of plasticizer are preferably selected so that the TPU/plasticizer composition has a Shore A hardness within the above limits. Preferred amounts for the plasticizer, as mentioned above, are as high as 50% by weight, preferably about 38-42% by weight compared to the total weight of the TPU/plasticizer composition. Advantageously, the plasticizer used does not include phthalates. Suitable plasticizers are, for example, dipropylene glycol dibenzoate (DPGDB), glycerol tripropionate (GTP), triethylene glycol diacetate (TEGDA) or in general long-chain polyesters.

In very advantageous embodiments of the invention, the plasticizer is a non-reactive plasticizer.

Contrary to what is said in patent EP 1 080 154 B1, which describes a TPU/EVA mixture with very high amounts of TPU and with high Shore hardness of the TPU, in the invention the plasticizer contained in the TPU can be incorporated in the compound without having to be crosslinked with an ethylene polymer.

On the other hand, the international application WO 03/106563 A1, departing from the invention, describes that a simple blend between TPU and EVA does not result in any advantage and that the simultaneous presence of a reactive isocyanate is required to create a chemical bond between TPU and EVA.

In a preferred variant of the invention, the TPU consists of polyester polyols obtained from adipic acid, succinic acid or sebacic acid and mixtures thereof and from diols such as propanediol, butanediol, monoethylenediol, methylpentyldiol, neopentyl glycol, hexanediol and mixtures thereof, or the TPU consists of polyether polyols such as polytetramethylene glycol (PTMG), polypropylene glycol or polyetherpolyols obtained from reactions of propylene-ethylene-oxide or from mixtures thereof, where in both cases, both in the case of polyesters and polyethers, the isocyanates are selected from aliphatic isocyanates such as hexamethylene diisocyanate (HDI), isophorone diisocyanate (IPDI) or from aromatic isocyanates such as diphenylmethane diisocyanate (MDI) and wherein the chain extenders are selected from propanediol, butanediol, monoethylenediol, methylpentyldiol, neopentyl glycol, hexanediol and mixtures thereof, for example the butanediol (BDO) and neopentylglycol (NPG) mixture, or the TPU consists of mixtures thereof. The preferred type of polyol is based on an adipate of butanediol and/or monoethylene glycol. The preferred diisocyanate is MDI.

Advantageous are, in general, polyester TPU based on aliphatic dicarboxylic acids and MDI. In a variant of the invention, the TPU can be a crosslinkable TPU.

Preferably, the weight ratio between crosslinkable polyolefin and stabilizing polymer is in a range from 100:5 to 100:15, preferably from 100:5 to 100:10, more preferably it is about 100:10. Advantageously, the stabilizing polymer is selected from LDPE, HDPE, LLDPE, metallocene polyolefins with a melting point lower than 130 °C, where LDPE is preferred.

Advantageously, the polyester polyols have an average molecular weight ranging from 1000 to 4000, while the polyether polyols have a molecular weight ranging from 650 to 6000; preferably, the polyols have a molecular weight of about 2000.

In a preferred variant of the invention, the molar ratio in the TPU between polyol and chain extender with respect to the isocyanate is lower than 8:2. Preferably, the compound is in the form of granules.

A second aspect of the invention relates to a compound according to the invention which is crosslinked and foamed. In other words, advantageously, the compound has been foamed and, in particular, the polyolefin part has been crosslinked. Crosslinking and foaming preferably take place by the action of the crosslinking agent and of the foaming agent by heating the compound to temperatures suitable for triggering the crosslinking and foaming. Advantageously, the crosslinked and foamed compound has a thermal shrinkage measured at 70 °C for 24 hours lower than 2.5%, preferably lower than 1.5%.

A further aspect of the invention relates to a process for the production of a compound according to the invention which comprises the following step:
(I) mixing at least:
   (a) a crosslinkable polyolefin, selected from ethylene vinyl acetates (EVAs); ethylene-propylene rubbers (EPRs); OBC elastomers; polyolefin elastomers such as POE or EPR; ethylene-propylene-diene rubbers (EPDMs); nitrile rubbers; or styrene elastomers such as SIS, SEBS, SBS, SEPS, SEEPS or mixtures thereof;
   (b) a thermoplastic polyurethane (TPU), polyether or polyester or mixtures thereof either containing a plasticizer or not, wherein said TPU, whether plasticized or not, has a softening point determined by DSC lower than 160 °C, preferably lower than 150 °C, more preferably lower than 130 °C, even more preferably lower than 125 °C;
   (c) a stabilizing polymer preferably selected from LDPE, HDPE, LLDPE, metallocene polyolefins with a melting point lower than 130 °C, or mixtures thereof, in particular LDPE;
   (d) at least one crosslinking agent, in particular a peroxide or the like;
   (e) at least one foaming agent; and
   (f) optionally, one or more further additives selected from coagents, lubricants, kickers, fillers, pigments and oils;
   wherein
   (i) the weight ratio between crosslinkable polyolefin and TPU without the weight of any plasticizers present in the TPU is in a range from 100:100 to 100:3, preferably from 100:40 to 100:5, more preferably from 100:40 to 100:10, even more preferably from 100:30 to 100:15;
   (ii) the hardness of the TPU, whether plasticized or not, is in the range from 38 to 85 Shore A, preferably it is lower than 70 Shore A, more preferably lower than 55 Shore A;
   wherein, during the mixing, the crosslinking and foaming of the compound are not initiated.

Preferably, the homogeneous mixture obtained in the above process is converted into granules.

In a preferred variant of the invention, the mixture obtained in step (I) of the process or the above granules are converted in an article having defined shape by crosslinking and foaming said mixture or said granules into a mold heated to temperatures suitable for triggering the crosslinking and foaming of the compound, wherein the thermal shrinkage of the crosslinked and foamed compound measured at 70 °C for 24 hours is lower than 2.5%, preferably lower than 1.5%.

Various known processes can be conceived for mixing the single components of step (I), of which three are described in an exemplary and general manner in the part of the application describing the preferred embodiments of the invention. All three processes for obtaining a homogeneous mixture can be applied to the compound of the invention.

The above-indicated features for the compound according to the invention can, *mutatis mutandis,* all be transferred to the process according to the invention.

One last aspect of the invention relates to an article produced with the compound according to the invention or produced with the product obtained according to the process according to the invention, wherein the article is preferably a sole, a midsole or an upper for shoes. The crosslinked and foamed compound according to the invention, due to its elastic, soft, light and low thermal shrinkage features, is particularly suitable for use in shoes, and particularly in soles, midsoles and uppers for shoes, and also in the production of technical articles and sports applications.

In a preferred variant of the invention, the article produced with the compound according to the invention or produced with the product obtained according to the process according to the invention is a technical article, preferably a technical article for saddles - in particular for bicycle saddles. Very preferably, the technical article is a padding for saddles, particularly for bicycle saddles. Due to its particular technical features, the compound has proved very suitable as a material for the above-mentioned technical articles, in particular for paddings for bicycle saddles.

The above-mentioned objects and advantages will be better highlighted in the description of preferred embodiments of the invention given by way of a non-limiting example.

Variants of the invention are object of the dependent claims. The description of preferred exemplary embodiments of the compound, the process and the article according to the invention is given by way of a non-limiting example.

### Description of preferred exemplary embodiments

For the production of the compound according to the invention and its conversion into a crosslinked and foamed product (article/manufactured article), the following descriptions of general production processes will serve as an example.

The manufacturing process of any article can be substantially divided into two steps.

In the first step, the mixture, called compound, of the necessary components for obtaining, in the final processing cycle, an article having the desired mechanical properties is prepared.

Generally, the compositions of the compounds include base polymers and additives. A method of manufacturing the compound provides that these ingredients, suitably dosed, are mixed in suitable mixers until obtaining a homogeneous mixture, which is then introduced into extruders which melt and homogenize the components, allowing a mixture to be obtained in which all the additives are finely dispersed in the base polymer(s).

Particular care is given to the extruders which are maintained at such temperatures as not to trigger the intervention of the crosslinking agent and not to degrade the foaming agents.

In this step, therefore, no reaction is triggered, thus making the cycle described entirely similar to the manufacturing and processing cycle of thermoplastic alloys.

The final product thus obtained is to all effects a thermoplastic product ready to crosslink and foam, if heated to appropriate temperatures.

A further manufacturing method differs from the previous one in that it does not provide, in the preliminary step, the preparation of the homogeneous mixture. In this case, an extruder is used which is provided with gravimetric metering devices which first provide the polymers to the extruder, which are melted, and subsequently the various additives, which are mixed in the mass of molten polymers, thus generating the homogeneous compound previously described. Another method of manufacturing the compound, generally used in the manufacture of rubber, provides for preparing a hot premix in internal mixers (for example of the Banbury type); this compound is unloaded onto cylinder mixers so as to obtain a sheet of adequate thickness which, if desired, being subsequently cut with a dicer, allows obtaining a cube-shaped granule.

The end result in all the three cases described is obtaining a compound, preferably in the form of granules, ready to be transformed by the end user with extrusion or injection molding processes.

The second step involves the transformation of the product from thermoplastic to the final thermoset polymer.

To do this, the compound is introduced, for example, in a press for injection of plastic material including a punching screw injector consisting of a cylinder and a screw adapted to carry granules inside the cylinder which, heated to the desired temperature, allows the melting or plasticization of the compound. By suitably controlling the temperature of the cylinder so that it does not reach the trigger temperature, which is typically in the order of 110-130 °C, of both the crosslinking agent and of the foaming agent, it is possible to carry out the cycle in the thermoplasticity area of the material. The compound thus molten can then be injected into the mold which, if maintained at a low temperature (usually 20-60 °C), does not trigger crosslinking and foaming processes while, if heated to a high temperature, in the order of 150-190 °C for suitable times easily identifiable by the man skilled in the art, heats the polymer triggering the action of the crosslinking agent, for example the peroxide, thus initiating the polymer crosslinking process and the transformation of foaming agents into gases.

The gases, although developing a high pressure, are confined inside the mold by the closing action of the press, thus remaining finely dispersed in the polymer. The crosslinking process then proceeds progressively according to the known rheological curve with the following steps:
- decomposition of the crosslinking agent with formation of free radicals;
- extraction of hydrogen atoms, by the free radicals, from the polymer chains which leads to stable peroxide decomposition products and to polymer with free radicals;
- combination of the polymer-bound radicals and crosslinking formation.

As is known, both the amount and the type of crosslinking agent introduced allow adjusting the crosslinking degree.

In particular, if the stoichiometric amount of crosslinking agent introduced in the mixture is sufficient, it is possible to achieve the total polymer crosslinking, otherwise crosslinking levels of less than 100% are achieved.

By suitably selecting, according to the knowledge of the man skilled in the art, the temperature and the residence time of the polymer into the mold, the crosslinking reaction is completed until the entire crosslinking agent is consumed, thus preventing a further subsequent increase in viscosity and thus obtaining the partial or complete crosslinking.

Once the crosslinking process is completed, the mold is opened allowing the gases to suddenly expand the article, causing the automatic escape thereof from the mold with a sort of small explosion.

The amount of foaming agent present in the compound, and consequently of the volume of gas generated, together with the toughness and resistance which the polymer opposes to the gas expansion pressure, determine the size of the article.

More specifically, the volume of the generated crosslinked article is directly proportional to the volume of gases generated, to the physical-mechanical features of the crosslinked polymer and to the crosslinking degree reached by the polymer.

The foamed article is characterized by a foamed core and by a very fine and compact outer surface due to the maximum crosslinking and thus of toughness degree that the polymer surface in contact with the mold reaches first.

The article has a compact surface, a shiny appearance and color depending on the types and on the amounts of pigments present in the compound.

Its shape follows the appearance of mold that has created it, while having proportionally greater size, function of the foaming agents present in the compound unless there was shrinkage due to the thermal contraction generated by the temperature difference between the mold and the environment.

In order to illustrate the advantages of the compound according to the invention, a known compound based on EVA only without the simultaneous presence of TPU is described hereinafter as a comparative example. The known compound provides a formulation expressed by weight equal to the mixture described in table 1 below:

**Table 1**

| *Component* | *Quantity (parts by weight)* |
|---|---|
| EVA* | 100 |
| LDPE | 10 |
| CaCO₃ | 9 |
| Bis(tert-butyl peroxy propyl)benzene | 1 |
| Azodicarbonamide | 3 |
| Zinc stearate | 1.5 |
| Master carbon black ** | 3 |

| | |
|---|---|
| * *MFI* = *2, vinyl acetate (VA) content* = *18 wt%* ** *50wt% carbon*/*50 wt% EVA* | |

The compound homogenized in a Ribbon blender and extruded with twin-screw extruder at temperatures of 100-110 °C allows obtaining cylindrical grains of about 3 mm in diameter and 2.5 mm in length which, molded in a punching screw injection press provided with a mold of a plate of about 6 mm in thickness, 90 mm in width and 120 mm in length, heated to 180 °C with a cylinder temperature of 95 °C and mold crosslinking time of 4 minutes, give rise to a parallelepiped foamed crosslinked article.

Below (table 2) are some experimental measurements made on the foamed plate which allow assessing, using known parameters, some mechanical properties of the resulting article:

**Table 2**

| *Feature* | *Value* | *Method of measurement* |
|---|---|---|
| density | 200 g/cm³ | ASTM D 792 |
| Asker C hardness at 23 °C | 62 | ASTM D 2240 |
| load at break | 2.5 MPa | ASTM D 638 |
| elongation at break | 250% | ASTM D 638 |
| thermal stability on plate 120x90x6 mm | | as described above |
| 24h shrinkage at 70 °C | 2.5% | |
| 24h shrinkage at 50 °C | 0.9% | |

Below are some preferred exemplary embodiments.

### EXAMPLE NO. 1

According to a preferred exemplary embodiment of the invention, the compound comprising a plasticized thermoplastic polyurethane provides a formulation expressed by weight equal to the mixture described in table 3 below.

**Table 3**

| *Component* | *Quantity (parts by weight)* |
|---|---|
| EVA* | 100 |
| LDPE | 10 |
| CaCO₃ | 9 |
| Bis(tert-butyl peroxy propyl)benzene | 1 |
| Azodicarbonamide | 3 |
| Zinc stearate | 1.5 |
| Plasticized TPU: Apilon 52 A-52/1*** | 30 |
| Master carbon black ** | 3 |

| | |
|---|---|
| * *MFI* = *2, vinyl acetate (VA) content* = *18 wt%* ** *50wt% carbon*/*50 wt% EVA* **** the Apilon indicated is a product of the applicant A.P.I. S.p.A. and corresponds to a mixture that includes: an ester polyol (MW: 2000 BDO) of about 41.5 wt%, 2.9 wt% BDO, 0.003 wt% catalyst, 0.3% CDI stabilizer (carbodiimide), 14.2 wt% MDI, 0.04 wt% wax, 0.17 wt% of an antioxidant and 40.8 wt% of a phthalate-free plasticizer.* | |

The plasticized polyurethane used has a hardness of 52 Shore A and a density of 1.17 g/cm³ (at 25 °C, DIN 51 777). The polyurethane base is a polyester polyol based on aliphatic dicarboxylic acids, preferably based on adipic acid, and 1.4-butanediole with an average molecular weight of 2000, a Brookfield viscosity at 60 °C (ISO 3219) of 1,300-1,500 cps, acid number (ISO 3682) < 0.5 mg KOH/g and hydroxyl number (ISO 4629) of 54-58 mg KOH/g. The isocyanate used is MDI.

The mixture homogenized in a Ribbon blender and extruded with twin-screw extruder at temperatures of 100-110 °C led to the production of cylindrical granules of about 3 mm in diameter and 2.5 mm in length which, molded in a punching screw injection press provided with a mold of a plate of about 6 mm in thickness, 90 mm in width and 120 mm in length, heated to 180 °C using a cylinder temperature of 95 °C and mold crosslinking time of 4 minutes, gave rise to a parallelepiped article.

Below (table 4) are some mechanical features obtained through experimental measurements made on the foamed crosslinked plate thus obtained.

**Table 4**

| *Feature* | *Value* | *Method of measurement* |
|---|---|---|
| density | 190 g/cm³ | ASTM D 792 |
| Asker C hardness at 23 °C | 55 | ASTM D 2240 |
| load at break | 3.0 MPa | ASTM D 638 |
| elongation at break | 290% | ASTM D 638 |
| thermal stability on plate 120x90x6 mm | | as described above |
| 24h shrinkage at 70 °C | 1.1% | |
| 24h shrinkage at 50 °C | 0.3% | |

It should be noted that the addition of the thermoplastic polyurethane in the compound allowed obtaining an article which, subjected to thermal test, showed a shrinkage of nearly a third of the value obtained with previously described known compounds.

### EXAMPLE NO. 2

According to another preferred exemplary embodiment of the invention, the compound provides a formulation expressed by weight equal to the mixture described in the table below.

**Table 5**

| *Component* | *Quantity (parts by weight)* |
|---|---|
| EVA* | 100 |
| LDPE | 10 |
| CaCO₃ | 9 |
| Bis(tert-butyl peroxy propyl)benzene | 1 |
| Azodicarbonamide | 3 |
| Zinc stearate | 1.5 |
| Apilon 52 A-52/1*** | 50 |
| Master carbon black ** | 3 |

| | |
|---|---|
| * *MFI* = *2, vinyl acetate (VA) content* = *18 wt%* ** *50wt% carbon*/*50 wt% EVA* **** the Apilon indicated is a product of the applicant A.P.I. S.p.A. and corresponds to a mixture that includes: an ester polyol* (*MW: 2000 BDO) of about 41.5 wt%, 2.9 wt% BDO, 0.003 wt% catalyst, 0.3% CDI stabilizer (carbodiimide), 14.2 wt% MDI, 0.04 wt% wax, 0.17 wt% of an antioxidant and 40.8 wt% of a phthalate-free plasticizer.* | |

The same plasticized polyurethane used in example No. 1 was used in the test, except that the amount was increased from 30 pbw to 50 pbw.

Below (table 6) are some mechanical features obtained through experimental measurements made on the foamed crosslinked plate thus obtained.

**Table 6**

| *Feature* | *Value* | *Method of measurement* |
|---|---|---|
| density | 190 g/cm³ | ASTM D 792 |
| Asker C hardness at 23 °C | 52 | ASTM D 2240 |
| load at break | 3.0 MPa | ASTM D 638 |
| elongation at break | 320% | ASTM D 638 |
| thermal stability on plate 120x90x6 mm | | as described above. |
| 24h shrinkage at 70 °C | 0.8% | |
| 24h shrinkage at 50 °C | 0.2% | |

It should be noted that the increase in pbw of the thermoplastic polyurethane in the compound, compared to example N. 1, further lowered the thermal shrinkage level.

In the execution step, further changes or embodiment variants not described may be made to the compound, the process and the article object of the invention. Where such changes or such variants should fall within the scope of the following claims, they shall be understood as all protected by the present patent.

## Claims

1. A compound for the production of high softness and thermal stability crosslinked articles made by injection molding, comprising:
(a) a crosslinkable polyolefin, selected from ethylene vinyl acetates (EVAs); ethylene-propylene rubbers (EPRs); OBC elastomers; polyolefin elastomers such as POE or EPR; ethylene-propylene-diene rubbers (EPDMs); nitrile rubbers; or styrene elastomers such as SIS, SEBS, SBS, SEPS, SEEPS or mixtures thereof;
(b) a thermoplastic polyurethane (TPU), polyether or polyester or mixtures thereof either containing a plasticizer or not, wherein said TPU, whether plasticized or not, has a softening point determined by DSC lower than 160 °C, preferably lower than 150 °C, more preferably lower than 130 °C, even more preferably lower than 125 °C;
(c) a stabilizing polymer preferably selected from LDPE, HDPE, LLDPE, metallocene polyolefins with a melting point lower than 130 °C, or mixtures thereof, in particular LDPE;
(d) at least one crosslinking agent, in particular a peroxide or the like;
(e) at least one foaming agent; and
(f) optionally, one or more further additives selected from coagents, lubricants, kickers, fillers, pigments and oils;
wherein
(i) the weight ratio between crosslinkable polyolefin and TPU without the weight of any plasticizers present corresponds to a range from 100:100 to 100:3, preferably from 100:40 to 100:5, more preferably from 100:40 to 100:10, even more preferably from 100:30 to 100:15;
(ii) the hardness of the TPU, whether plasticized or not, is in the range from 38 to 85 Shore A, preferably is lower than 70 Shore A, even more preferably lower than 55 Shore A.

2. The compound according to claim 1, **characterized in that** the crosslinkable polyolefin indicated at point (a) is an ethylene vinyl acetate (EVA).

3. The compound according to claim 1, **characterized in that** said crosslinkable polyolefin comprises ethylene vinyl acetate (EVA) and also butylene acrylate (EBA) and ethylene methylacrylate (EMA).

4. The compound according to any one of the preceding claims, **characterized in that** said EVA is a non-derivatized ethylene vinyl acetate.

5. The compound according to any one of the preceding claims, **characterized in that** the TPU includes a plasticizer which is present in amounts up to a TPU:plasticizer weight ratio of 1:1 or lower.

6. The compound according to claim 5, **characterized in that** the plasticizer is a non-reactive plasticizer.

7. The compound according to any one of the preceding claims, **characterized in that** the TPU consists of polyester polyols obtained from adipic acid, succinic acid or sebacic acid and mixtures thereof and from diols such as propanediol, butanediol, monoethylenediol, methylpentyldiol, neopentyl glycol, hexanediol and mixtures thereof, or **in that** the TPU consists of polyether polyols such as PTMG, polypropylene glycol and polyetherpolyols obtained from reactions of propylene-ethylene-oxide and mixtures thereof, where in both cases the isocyanates are selected from aliphatic isocyanates such as HDI, IPDI or from aromatic isocyanates such as MDI, and wherein the chain extenders are selected from propanediol, butanediol, monoethylenediol, methylpentyldiol, neopentyl glycol, hexanediol and mixtures thereof, or **in that** the TPU consists of a mixture thereof.

8. The compound according to any one of the preceding claims, **characterized in that** the weight ratio between crosslinkable polyolefin and stabilizing polymer corresponds to a range from 100:5 to 100:15, preferably from 100:5 to 100:10, more preferably to about 100:10.

9. The compound according to any one of claims 7 or 8, **characterized in that** the polyester polyols have an average molecular weight ranging from 1000 to 4000, while the polyether polyols have an average molecular weight ranging from 650 to 6000; preferably, the polyols have an average molecular weight of about 2000.

10. The compound according to any one of the preceding claims, **characterized in that** the compound is crosslinked and foamed **and in that** the crosslinked and foamed compound has a thermal shrinkage measured at 70 °C for 24 hours lower than 2.5%, preferably lower than 1.5%.

11. A process for the production of a compound according to any one of the preceding claims, comprising the following steps:
(I) mixing at least:
(a) a crosslinkable polyolefin, selected from ethylene vinyl acetates (EVAs);
ethylene-propylene rubbers (EPRs); OBC elastomers; polyolefin elastomers such as POE or EPR; ethylene-propylene-diene rubbers (EPDMs); nitrile rubbers; or styrene elastomers such as SIS, SEBS, SBS, SEPS, SEEPS or mixtures thereof;
(b) a thermoplastic polyurethane (TPU), polyether or polyester or mixtures thereof containing a plasticizer or not, wherein said TPU, whether plasticized or not, has a softening point determined by DSC lower than 160 °C, preferably lower than 150 °C, more preferably lower than 130 °C, even more preferably lower than 125 °C;
(c) a stabilizing polymer preferably selected from LDPE, HDPE, LLDPE, metallocene polyolefins with a melting point lower than 130 °C, or mixtures thereof, in particular LDPE;
(d) at least one crosslinking agent, in particular a peroxide or the like;
(e) at least one foaming agent; and
(f) optionally, one or more further additives selected from coagents, lubricants, kickers, fillers, pigments and oils;
wherein
(i) the weight ratio between crosslinkable polyolefin and TPU without the weight of any plasticizers present in the TPU corresponds to a range from 100:100 to 100:3, preferably from 100:40 to 100:5, more preferably from 100:40 to 100:10, even more preferably from 100:30 to 100:15;
(ii) the hardness of the TPU, whether plasticized or not, is in the range from 38 to 85 Shore A, preferably is lower than 70 Shore A, even more preferably lower than 55 Shore A;
wherein, during the mixing, the crosslinking and foaming of the compound are not initiated;
II) preferably, transforming the homogeneous mixture obtained in step (I) into granules;
III) optionally, transforming the mixture obtained in step (I) or the granules obtained in step (II) into an article having defined shape by the crosslinking and foaming of said mixture or said granules into a mold heated at temperatures suitable for triggering the crosslinking and foaming of the compound, wherein the thermal shrinkage of the crosslinked and foamed compound measured at 70 °C for 24 hours is lower than 2.5%, preferably lower than 1.5%.

12. An article produced with the compound according to any one of claims 1) to 10) or produced with the product obtained according to the process of claim 11), wherein the article is a technical article, preferably a technical article for saddles, in particular for bicycle saddles; much preferably, the technical article is a padding for saddles, in particular for bicycle saddles, OR
wherein the article is preferably a sole, a midsole or an upper for shoes.
